# EUROPEAN PATENT APPLICATION

(11) **EP 2 086 152 A2**
(43) Date of publication of application: **05.08.2009**
(21) Application number: 09150030.6
(22) Date of filing: 05.01.2009
(51) Int. Cl.: H04L 1/18

(54) **Method and device for processing data in retransmission processes**

(30) Priority: 31.01.2008 JP 2008020604
(71) Applicant: NEC CORPORATION, Minato-ku, Tokyo 108-8001 (JP)
(72) Inventor: Lee, Jinsock, Tokyo (JP)
(74) Representative: Vossius & Partner

(57) **Abstract**

A retransmission process control method is provided that increases the efficiency of memory usage in retransmission processes. A method for processing data in multiple retransmission processes, used in a receiving-side communication device, includes; determining whether or not a received signal can be stored in a reception buffer for retransmission processes; when the received signal cannot be stored in the reception buffer, discarding from the reception buffer at least part of existing received signals corresponding to retransmission processes in progress; and storing the received signal into the reception buffer.

## Description

This application is based upon and claims the benefit of priority from Japanese Patent Application No. 2008-020604, filed on January 31, 2008, the disclosure of which is incorporated herein in its entirety by reference.

The present invention relates to a communications system in which a retransmission process can be carried out between a sending-side communication device and a receiving-side communication device and, more particularly, to method and device for processing data in retransmission processes on the receiving side and a communication device using the method.

Hybrid automatic repeat request (HARQ) is an important technology to efficiently prevent loss of data in those mobile communications systems that employ packet transmission schemes, for example, high-speed packet transmission schemes such as High Speed Downlink Packet Access (HSDPA) and Enhance Uplink Dedicated Channel (EUDCH)/High Speed Uplink Packet Access (HSUPA).

HARQ is a type of ARQ error control method in which, with ARQ and error correction coding being combined, a request (NACK transmission) is made to retransmit data that has failed to be decoded. A communication device on the receiving side stores a data packet in which an error is detected and combines a retransmitted data packet with the stored data packet, whereby reception performance can be enhanced. Known HAPQ methods include Chase Combining, Incremental Redundancy, and the like (see 3GPP TR 25.848 V4.0.0 (2001-03), pp. 8-28) .

A HARQ method according to Chase Combining (hereinafter, referred to as CC-HARQ) and a HARQ method according to Incremental Redundancy (hereinafter, referred to as IR-HARQ) will be described below by using a turbo code with the code rate R = 1/3 as an example of an error correction code. In turbo coding at the code rate R = 1/3, for example, an information bit sequence with a length of L is coded, thereby generating a systematic bit sequence S with the same length of L and two parity bit sequences Parity1 and Parity2 each with the length of L. Based on these sequences, packets for transmission are generated.

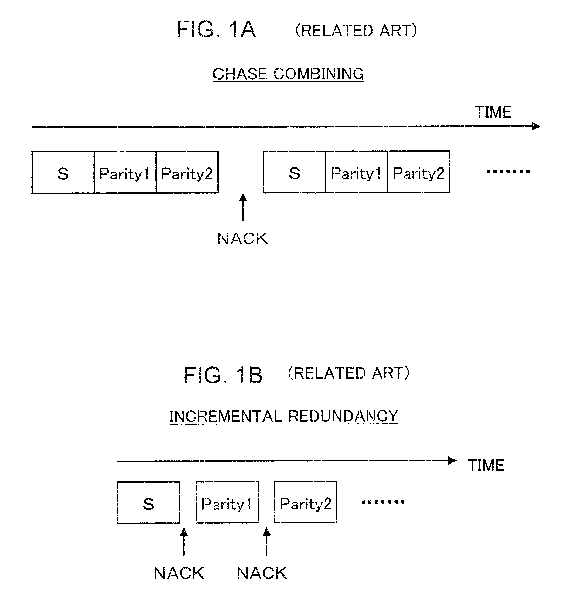

FIG. 1A is a schematic diagram showing an example of a transmission procedure according to CC-HARQ, and FIG. 1B is a schematic diagram showing an example of a transmission procedure according to IR-HARQ.

In CC-HARQ, retransmitted is the same coded packet that was transmitted for the first time. For example, it is assumed that a sending side transmits a coded packet (S + Parity1 + Parity2) composed of a systematic bit sequence S and two parity bit sequences Parity1 and Prity2, as shown in FIG. 1A. In this case, a receiving side decodes the coded packet received and, if an error is detected, sends NACK feedback to the sending side. The sending side, upon receipt of NACK, retransmits the same coded packet as the previous one (here, S + Parity1 + Parity2). The receiving side has stored the previous coded packet in which an error was detected. The receiving side combines the retransmitted coded packet with the previous coded packet and then decodes the packet. Thus, the probability of success in decoding can be increased.

On the other hand, in IR-HARQ, a sending side first transmits a coded packet (S) of a systematic bit sequence S, as shown in FIG. 1B. A receiving side decodes the received coded packet (S) and, when an error is detected, sends NACK feedback to the sending side. The sending side, upon receipt of NACK, transmits a coded packet of one of parity bit sequences Parity1 and Parity2 obtained by puncture (here, a coded packet (Parity1)). The receiving side performs decoding based on the received coded packet (Parity1) and the previously received coded packet (S). When an error is yet detected and NACK is returned, the sending side transmits the other remaining coded packet (here, a coded packet (Parity2)). The receiving side performs decoding based on the coded packet (S) first received and the parity bit sequences Parity1 and Parity2 received through retransmission. As described above, since a puncture pattern to be used varies with each retransmission, a different coded bit sequence is transmitted each time.

As to modes of retransmission sequence in HARQ, selective repeat mode, stop-and-wait mode, and the like are known. In the selective repeat mode, only those packets that have been received in error are retransmitted. It is possible to have multiple HARQ processes operate in parallel by setting a larger number of packets than the number of those packets that can be transmitted within a feedback delay time. Accordingly, the selective repeat mode has the advantage that the channel resources of the system can be efficiently used.

The stop-and-wait mode is the simplest and has the advantage that it requires very little control overhead. However, it has the drawback of reduced efficiency because the sending side needs to wait for feedback information from the receiving side. To increase efficiency, N-channel stop-and-wait HARQ has been proposed in which a plurality of stop-and-wait protocols operate in parallel (hereinafter, this mode will be referred to as "multi-stop-and-wait mode") (see 3GPP TR 25.848 V4.0.0 (2001-03), pp. 8-28). Specifically, while a HARQ process is waiting for feedback information, another HARQ process transmits data by using the channel in an idle state. The multi-stop-and-wait mode increases efficiency on the whole and consequently makes it possible to use the resources of the system without waste.

However, in the multi-stop-and-wait mode, it is necessary to secure a large memory capacity on the receiving side beforehand because packets transmitted in the individual HARQ processes need to be stored. In particular, the buffer size required for a HARQ buffer corresponding to each HARQ process depends on the maximum transmission rate, coding rate, number of bits for each soft symbol received, and the like. Accordingly, the total HARQ buffer size required is the sum total of the individual HARQ buffer sizes. Assuming that N is the number of HARQ processes and the individual HARQ buffer sizes are equal to each other, the total HARQ buffer size is N times the individual HARQ buffer size.

In the selective repeat mode, the control overhead is large because it is necessary for the sending side to identify each packet for transmission. Moreover, on the receiving side, since a soft symbol needs to be kept for each received packet, it is necessary to secure as large a memory capacity as can accommodate a maximum number of packets that can be handled.

Incidentally, when multiple HARQ processes as described above operate, the probability that each HARQ process succeeds in data transmission is determined by a plurality of factors, such as channel quality at the time of reception, transmission power, modulation method and coding method, and other factors affecting the reception quality of a data packet. Here, a case will be considered where N HARQ processes exist concurrently, with p being the target error rate during data transport. Assuming that the probabilities of the individual HARQ processes succeeding in transmission are independent of each other, that is, the probability of a HARQ process succeeding/failing does not affect the probability of another HARQ process succeeding/failing, then the probability of M (M is an integer not larger than N) HARQ processes failing at the same time is p^{M}. A specific example will be described below.

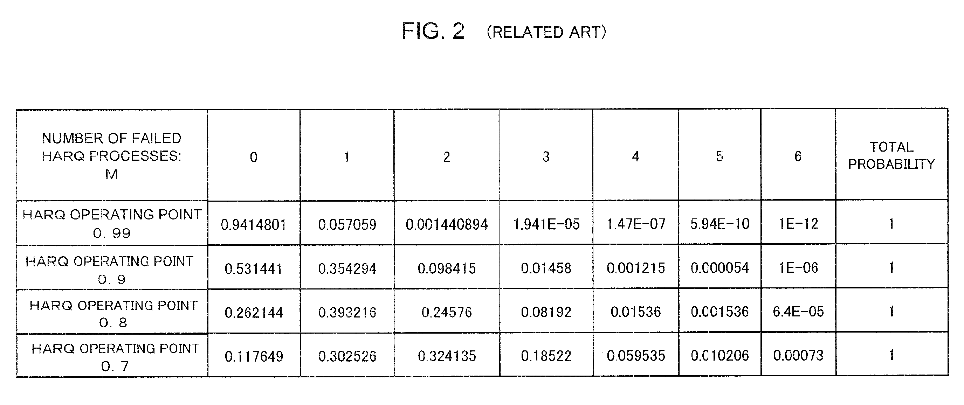

FIG. 2 is a diagram showing variations of HARQ process failure probability, in relation to the HARQ operation point and the number of HARQ processes failing at the same time. Here, shown are the probabilities that, of six HARQ processes (N = 6) , M HARQ processes fail in transmission. For example, "M = 0" indicates a case where there is no failed HARQ process (i.e., all HARQ processes succeed in data transmission). Moreover, "HARQ operation point 0.99" indicates that the HARQ reception error rate p = 0.01.

In the case of the HARQ operation point 0.9, the probability that all HARQ processes fail in data transmission is 0.000001 as shown at "M = 6" in FIG. 2, and conversely, the probability that all HARQ processes succeed is approximately 0.53 as shown at "M = 0" in FIG. 2. In terms of time, this means that the time period for which all HARQ buffers are occupied is equivalent to only 0.0001%, and that the HARQ buffers stay empty for a time period equivalent to 53%.

Although this analysis is considerably simplified, it shows that even if a maximum HARQ memory capacity is installed, that precious memory resource is seldom fully used.

The total HARQ buffer size grows with an increase in the individual HARQ buffer size or in the number of HARQ processes. Moreover, in mobile communication, transmission and reception of data packets can be performed at high rates exceeding several megabits per second. It is conceivable that as this transmission bit rate continues increasing also in the future, more efficient HARQ techniques are employed, resulting in larger and larger HARQ buffer sizes being required. In general, as the HARQ buffer size grows, the size of a communication device such as a modem chip set also grows, resulting in the cost of the communication device also increasing. Not only the size of the communication device, power consumption also rises with an increase in the required HARQ buffer capacity.

As described above, in a communication device where multiple retransmission processes operate in parallel for retransmission of data in which a reception error has been detected, the memory resource used for the multiple retransmission processes is not efficiently used. This leads to an unnecessary increase in the device size and power consumption.

Accordingly, an object of the present invention is to provide a method for processing data in retransmission processes by which the efficiency of memory usage in the retransmission processes can be increased, as well as a device using the method.

According to a method for processing data in a plurality of retransmission processes in a receiving-side communication device, comprising: determining whether a reception buffer for retransmission process is able to store a received signal; when the reception buffer for retransmission process is unable to store the received signal, discarding at least part of an existing received signal corresponding to a retransmission process in progress from the reception buffer for retransmission process; and storing the received signal in the reception buffer for retransmission process.

According to a device for processing data in a plurality of retransmission processes in a receiving side, comprising: a storage section for storing a received signal for retransmission process; a determination section for determining whether the storage section is able to store a received signal; a controller controlling such that, when the storage section is unable to store the received signal, at least part of an existing received signal corresponding to a retransmission process in progress is discarded from the storage section so as to store the received signals in the storage section.

It is possible to increase the efficiency of memory usage in retransmission processes.
FIG. 1A is a schematic diagram showing an example of a transmission procedure according to Chase Combining (CC-HARQ).
FIG. 1B is a schematic diagram showing an example of a transmission procedure according to Incremental Redundancy (IR-HARQ).
FIG. 2 is a diagram showing variations of HARQ process failure probability, in relation to the HARQ operation point and the number of HARQ processes failing at the same time.
FIG. 3A is a block diagram showing a schematic configuration of a retransmission process control circuit in a communication device according to a first exemplary embodiment of the present invention.
FIG. 3B is a time chart to describe the operations of a multiple-retransmission-process control method according to the first exemplary embodiment.
FIG. 4 is a flow chart showing a schematic procedure of the retransmission process control method according to the first exemplary embodiment.
FIG. 5 is a block diagram showing a schematic configuration of a radio communication device according to an example of the present invention.
FIG. 6 is a flow chart showing HARQ process control by the radio communication device according to the present example.
FIG. 7A is a schematic diagram showing the memory capacity of a HARQ reception buffer.
FIG. 7B is a state transition diagram of the HARQ reception buffer to describe an example of the operations in the multi-stop-and-wait mode in a specific example.
FIG. 8A is a schematic diagram showing the capacity (the number of the memory units) of a HARQ reception buffer used in conventional multiple-HARQ-process control.
FIG. 8B is a state transition diagram of the HARQ reception buffer to describe an example of the operations of the conventional multiple-HARQ-process control in the multi-stop-and-wait mode.
FIG. 9A is a block diagram showing a schematic configuration of a retransmission process control circuit in a communication device according to a second exemplary embodiment of the present invention.
FIG. 9B is a time chart to describe the operations in a multiple-retransmission-process control method according to the second exemplary embodiment.
FIG. 10A is a schematic block diagram of a packet data communications system using the radio communication device according to the example of the present invention.
FIG. 10B is a block diagram showing a turbo encoder, which is an example of an encoder.

### 1. First exemplary embodiment

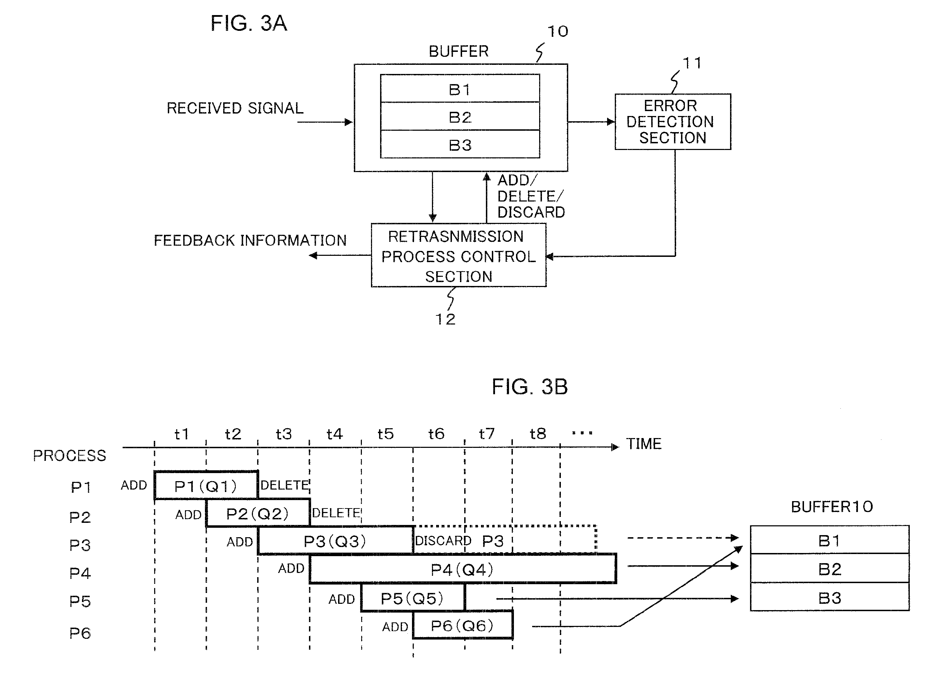

FIG. 3A is a block diagram showing a schematic configuration of a retransmission process control circuit in a communication device according to a first exemplary embodiment of the present invention. FIG. 3B is a time chart to describe the operations of a method for processing data in multiple retransmission processes according to the first exemplary embodiment. Here, to avoid complicating the description, it is assumed that a buffer 10 having three (m = 3) memory areas B1 to B3 for six (n = 6) retransmission processes P1 to P6 is provided, with each memory area storing one received signal that may become the target of retransmission in one retransmission process. Note that the number (n) of retransmission processes and the number (m) of memory areas shown here are examples for description purpose and are not limited to six and three, respectively.

An error detection section 11 detects an error in a received signal stored in the buffer 10 and outputs the result of this detection to a retransmission process control section 12. The retransmission process control section 12 adds to (ADD), deletes from (DELETE), or discards from (DISCARD) the buffer 10 a received signal corresponding to each retransmission process.

ADD is performed when the buffer 10 has a sufficient free area, and a new received signal is stored in this free area. DELETE is performed when no error is detected in a received signal, and the received signal in question is deleted from the buffer 10 (release of a corresponding area of the buffer 10). DISCARD is performed when a new received signal occurs while the buffer 10 does not have as large a free area as required. In this case, at least one process is selected among ongoing retransmission processes, and the received signal corresponding to this selected process is deleted from the buffer 10 (release of a corresponding area of the buffer 10).

The retransmission process control section 12 deletes from the buffer 10 a received signal in which no error is detected and, at the same time, returns feedback information indicative of a normal reception (e.g., ACK) to the sending side (originator) of this received signal. In a case where an error is detected in a received signal stored in the buffer 10, the retransmission process control section 12 returns feedback information indicative of a reception in error (e.g., NACK) to the originator of this received signal while keeping this received signal in the buffer 10. The originator, upon being notified of the reception in error, retransmits the retransmission target signal in accordance with the retransmission process in question. The retransmission process control section 12 has the error detection section 11 carry out error detection using the retransmitted received signal and the previously received signal.

Referring to the example shown in FIG. 3B, a received signal to be subjected to a retransmission process P1 is added to the buffer 10 at the time point t1 and, when the normal reception thereof is confirmed by the error detection section 11, is deleted at the time point t2. Accordingly, in this case, the period between the ADD point t1 and the DELETE point t2 is the length of buffer occupation made by the received signal in the retransmission process P1. A retransmission process P2 is similar. Specifically, a received signal is added to the buffer 10 at the time point t2 and, when the normal reception thereof is confirmed, is deleted at the time point t3.

On the other hand, a case will be described where a retransmission process P3 is selected as a target of DISCARD. A received signal to be subjected to the retransmission process P3 is added to the buffer 10 but, later on, is discarded to empty the buffer area when a received signal to be subjected to a subsequent retransmission process P6 is added. Specifically, in the retransmission process P3, a received signal is added to the memory area B1 of the buffer 10 at the time point t3. Here, it is assumed that an error is detected by the error detection section 11, in which case the received signal in question is kept in the memory area B1 and feedback information NACK is returned to the originator. In this manner, the retransmission process P3 falls in a retransmission wait state. In a subsequent retransmission process P4, similarly, a received signal is added to the memory area B2 of the buffer 10 at the time point t4, and an error is assumed to be detected also in this received signal, which is therefore kept in the memory area B2. Further, a received signal to be subjected to a retransmission process P5 is added to the memory area B3 of the buffer 10 at the time point t5, at which point there is no free area left in the buffer 10.

In this fully occupied state of the buffer 10, when a new retransmission process P6 occurs, the retransmission process control section 12 selects as a target of DISCARD one of the retransmission processes P3, P4, and P5 that are using the buffer 10, and discards the received signal corresponding to the selected retransmission process from the buffer 10. This retransmission process as a target of DISCARD can be selected based on various criteria. For example, the oldest one of the retransmission processes P3, P4, and P5 can be selected. However, since the existence of a retransmission process depends on whether or not an error is detected, it is also preferred to select a retransmission process in which the corresponding received signal has the lowest quality. In this event, preferably, the cumulative value of reception quality in each retransmission process is used. Other adoptable criteria for selection include factors affecting the reception quality.

In the case of selecting the oldest process, here, the retransmission process P3 is a target of DISCARD. In the case of selecting the lowest-reception-quality process, a target of DISCARD is the process in which the corresponding received signal has the lowest reception quality among the reception qualities Q3, Q4 and Q5 corresponding to the retransmission processes P3, P4 and P5, respectively. It is also possible to use two criteria concurrently, as in a case where if there are a plurality of lowest-reception-quality processes, the oldest one of these processes is selected. Here, it is assumed that the retransmission process P3 is selected.

Upon selection of the retransmission process P3 as a target of DISCARD, the retransmission process control section 12 discards the corresponding received signal stored in the memory area B1 of the buffer 10 at the time point t6, and adds the received signal in the new retransmission process P6 to the memory area B1 of the buffer 10. As described above, even when there is no free area left in the buffer 10, a free area is created by discarding an existing retransmission process based on a certain criterion or criteria of selection, whereby a retransmission process for a new received signal can be accepted. Accordingly, it is possible to carry out multiple retransmission processes by using the memory areas B1 to B3 that are fewer in number than the retransmission processes P1 to P6. In other words, it is possible to handle n retransmission processes by using a memory capacity that is equivalent to m (< n) retransmission processes.

Incidentally, the termination of the retransmission process P3 on the receiving side disables the originator from receiving feedback information with regard to the retransmission process P3. As a result, the originator transmits again the signal to retransmit in accordance with the retransmission process P3. On the receiving side, since the retransmission process P3 no longer exists, this received signal is added to the buffer 10 as a received signal to be subjected to a new retransmission process.

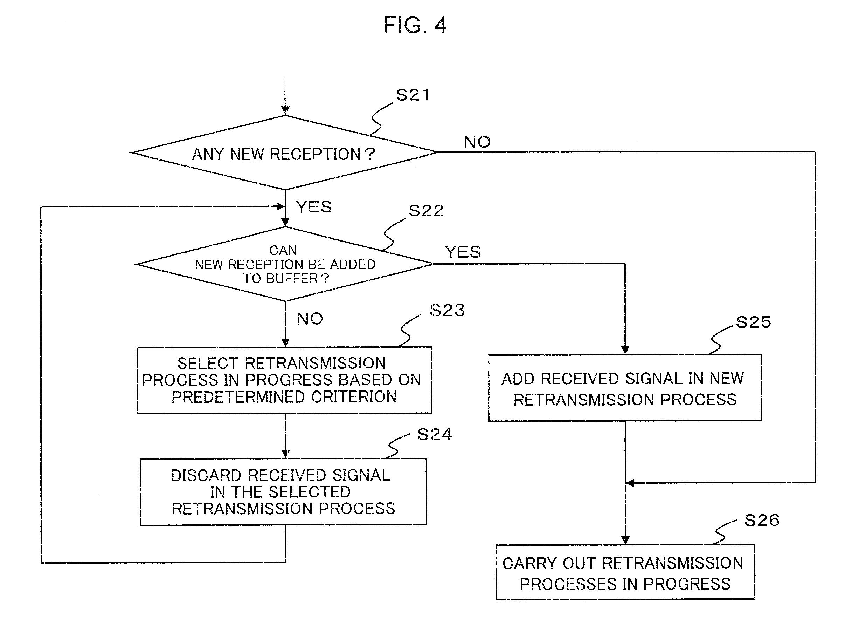

FIG. 4 is a flow chart showing a schematic procedure of a retransmission process control method according to the present exemplary embodiment. The retransmission process control section 12, upon knowing the occurrence of a new received signal (S21: YES) , determines whether or not it is possible to add this new received signal to the buffer 10 (S22).

When the new received signal cannot be added (S22: NO), the retransmission process control section 12 selects one of retransmission processes currently in progress, based on a criterion of selection as described above (S23), and discards the received signal in the selected retransmission process from the buffer 10 (S24). After thus discarding the received signal in the selected retransmission process, the control goes back to the step S22, where the retransmission process control section 12 determines whether or not it is possible to add the new received signal in question. When the new received signal can be added (S22: YES), the retransmission process control section 12 adds this new received signal to be subjected to a new retransmission process to the buffer 10 (S25) and then carries out multiple retransmission processes as described above (S26). If there is no occurrence of a new received signal (S21: NO), the multiple retransmission processes currently in progress continue to be carried out (S26).

Note that the function of controlling multiple retransmission processes according to the present exemplary embodiment can also be implemented by executing a computer program on a program-controlled processor.

### 2. Example

### 2.1) Configuration

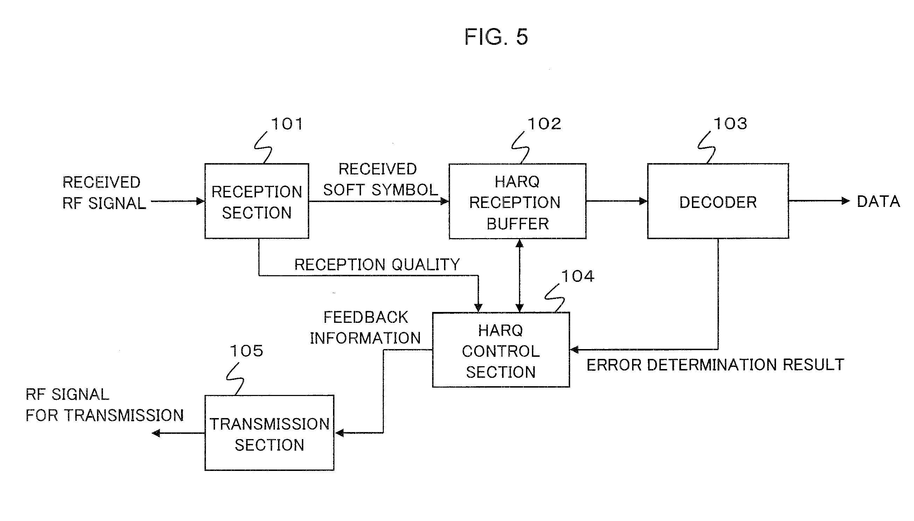

FIG. 5 is a block diagram showing a schematic configuration of a radio communication device according to an example of the present invention. Here, it is assumed that a HARQ process will be illustrated as an example of a retransmission process, and that reception quality will be used as the criterion for selecting a process as a target of DISCARD. Moreover, it is assumed that a sending-side radio communication device (not shown) encodes data for transmission, modulates a coded packet to generate a transmission signal, and transmits the transmission signal through radio, and that on the receiving side, the coded packet demodulated from the received signal is stored in a HARQ reception buffer as a target of retransmission in a HARQ process.

A reception section 101 of the radio communication device according to the present example includes a demodulator, which demodulates a RF signal received from the sending-side radio communication device to generate a soft-decision output (hereinafter, referred to as "soft symbol"), and measures the reception quality of the received signal (here, the signal-to-interference ratio SIR). The received soft symbols for a received packet are stored in a HARQ reception buffer 102 and then output to a decoder 103. The HARQ reception buffer 102 has a predetermined number (m) of memory units (areas), of which a specified number of memory units are assigned to one HARQ process.

The decoder 103 decodes a received packet from the soft symbols thereof and outputs the decoded data packet to an upper layer. At this time, the decoder 103 notifies a HARQ control section 104 of a result of error determination, which indicates whether the decoding is normally complete or has ended in failure.

The HARQ control section 104 controls a predetermined number (n) of HARQ processes, based on synchronous HARQ processing in which a HARQ process is determined based on time. The HARQ control section 104 controls the HARQ processes while referring to the reception quality SIR as the criterion of selection and controls the HARQ reception buffer 102 to perform ADD, DELETE, selective DISCARD and the like of the respective received signals of the HARQ processes. Specifically, the HARQ control section 104 stores soft symbols of a new coded packet in the HARQ reception buffer 102 when memory units are available to store the soft symbols in question. On the other hand, when new soft symbols are received in a state where all the memory units of the HARQ reception buffer 102 are occupied, the HARQ control section 104, while referring to the reception quality SIR as the criterion of selection, selects one of HARQ processes then in progress as a target of DISCARD and discards the soft symbols corresponding to the selected HARQ process from the HARQ reception buffer 102.

Incidentally, the reception quality SIR used as the criterion of selection may be a cumulative value of reception quality of the soft symbols received from the ADD time point up until the current time point in the HARQ process in question. In this case, the lowest-cumulative-reception-quality HARQ process is selected as a target process of DISCARD. The use of the cumulative value makes it possible to average the variations of the reception quality, and hence make accurate determination of the reception quality in the entire HARQ process in question.

When no error is detected, the HARQ control section 104 deletes the soft symbols in question from the HARQ reception buffer 102 and returns feedback information indicative of a normal reception (ACK) to the sending-side communication device through a transmission section 105. When an error is detected, the HARQ control section 104 keeps the soft symbols in question in the HARQ reception buffer 102 until decoding is successfully done or the soft symbols are discarded, and returns feedback information indicative of a reception in error (NACK) to the sending-side communication device through the transmission section 105.

Note that a function similar to the HARQ control section 104 can also be implemented by executing a computer program on a program-controlled processor.

### 2.2) Operation

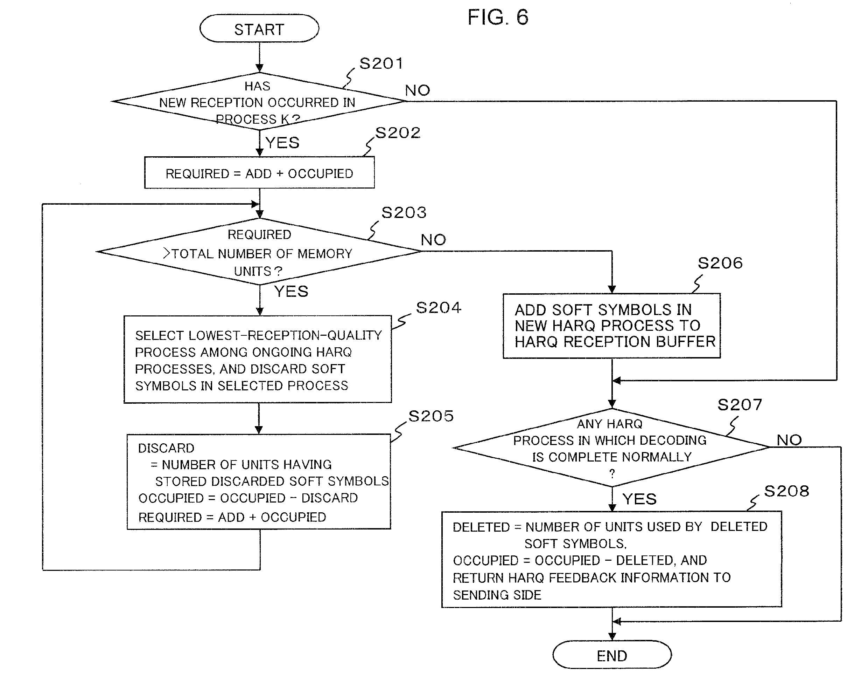

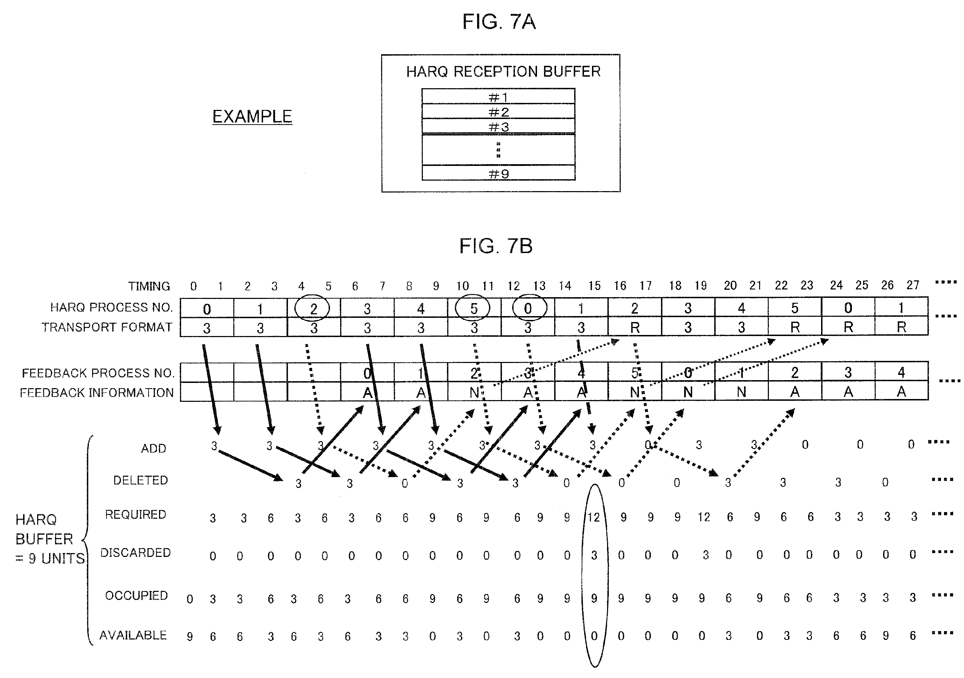

Hereinafter, the operations of the radio communication device according to the present example of the present invention will be descried in detail with reference to FIGS. 6, 7A and 7B,

FIG. 6 is a flow chart showing the HARQ process control by the radio communication device according to the present example . First, the HARQ control section 104 determines whether or not a new reception (soft symbols of a received coded packet) has occurred in a process k (k = 0, 1, 2, 3, 4 or 5) (S201). When a new reception has occurred (S201: YES), the HARQ control section 104 calculates a number "required," which is the number of memory units required, by adding a number "add," which is the number of memory units to be assigned to the new reception, to a number "occupied," which is the number of memory units currently occupied in the HARQ reception buffer 102 (S202). Subsequently, the HARQ control section 104 determines whether or not the calculated number "required" exceeds the capacity of the HARQ reception buffer 102 (here, the total number of the memory units = 9) (S203).

When the number "required" exceeds the total number of the memory units of the HARQ reception buffer 102 (S203: YES), the HARQ control section 104 carries out selective DISCARD. First, of the ongoing HARQ processes, the HARQ control section 104 selects a process in which the corresponding soft symbols have the lowest reception quality, and discards the soft symbols corresponding to the selected HARQ process from the HARQ reception buffer 102 (S204). Thus, a number "discard," which is the number of the memory units having stored the discarded soft symbols, is subtracted from the number "occupied," whereby a new number "required" is calculated (S205). Then, the comparison at the step S203 is carried out again, and the steps S204 and S205 are repeated as described above until the number "required" becomes equal to or below the total number of the memory units.

When the number "required" has become equal to or below the total number of the memory units (S203: NO), the HARQ control section 104 stores the new received soft symbols into unoccupied memory units of the HARQ reception buffer 102 (S206). Subsequently, the HARQ control section 104 determines whether or not there are soft symbols successfully decoded (S207). If there is soft symbols successfully decoded (S207: YES), the HARQ control section 104 deletes the soft symbols in question from the HARQ reception buffer 102, reduces the number "occupied" by the number of the memory units used by the deleted soft symbols, and returns feedback information (ACK) to the sending-side communication device through the transmission section 105 (S208). The step S208 is not carried out when there is no soft symbol successfully decoded. Additionally, the steps S207 and 208 are also carried out when no new reception occurs in the process k (S201: NO).

### 2.3) Specific example

Next, a specific example of the HARQ control will be described by taking the multi-stop-and-wait mode as an example.

FIG. 7A is a schematic diagram showing the memory capacity of the HARQ reception buffer 102, and FIG. 7B is a state transition diagram of the HARQ reception buffer 102 to describe an example of the operations in the multi-stop-andwait mode in the present specific example.

Here, to avoid complicating the description, it is assumed that six (n = 6) HARQ processes #0 to #5 sequentially repeat a HARQ transmission in order of their process numbers. It is also assumed that nine (m = 9) memory units #1 to #9 are provided to the HARQ reception buffer 102 as shown in FIG. 7A, and that every three units are assigned to received soft symbols corresponding to one HARQ process. Accordingly, in the present specific example, the HARQ reception buffer 102 can accommodate only as many soft symbols as correspond to a maximum of three HARQ processes at a time. According to the present specific example, however, even if the HARQ reception buffer 102 with such a small capacity is used, six HARQ processes can be controlled satisfactorily. Note that the number (n) of HARQ processes, the number (m) of memory units, and the number of memory units assigned to each HARQ process shown here are merely examples for description purposes and are not limited to six, nine, and three, respectively.

Referring to FIG. 7B, "TIMING" represents time slots according to a timing clock in the radio communication device shown in FIG. 5. Here, it is assumed that a transmission by each HARQ process is carried out in a period of two time slots. For instance, in the example of FIG. 7B, a transmission by a first HARQ process #0 is carried out in the period corresponding to the timings 0 and 1. To be more specific, this is a case where a TTI (Transmission Time Interval) corresponds to two time slots. However, a TTI is not limited to two time slots but may correspond to three or more time slots.

First, assume that the HARQ reception buffer 102 is empty (OCCUPIED = 0, AVAILABLE = 9). In this state, when a transmission by the HARQ process #0 is carried out, three memory units are required in total (REQUIRED = 3) for corresponding received soft symbols to be able to be added (ADD = 3). Therefore, the received soft symbols are added to the HARQ reception buffer 102 straightaway at the timing 1 (OCCUPIED = 3, AVAILABLE = 6). The received soft symbols are decoded by the decoder 103 during the timings 1 to 4, and it is assumed that the decoding is successfully done. In this case, the HARQ control section 104 deletes the soft symbols in question from the HARQ reception buffer 102 (DELETED = 3) and transmits feedback information ACK to the sending side at the timings 6 and 7. As described above, in the case of the HARQ process #0 that succeeds in decoding, the time period for which the corresponding soft symbols occupy the HARQ reception buffer 102 is between the timings 1 to 4 inclusive.

A HARQ process #1 is also an example of the case where decoding succeeds. When the HARQ reception buffer 102 is in the (OCCUPIED = 3, AVAILABLE = 6) state, new soft symbols are added to the HARQ reception buffer 102 at the timing 3 (OCCUPIED = 6, AVAILABLE = 3). When decoding is successfully done, the soft symbols in question are deleted from the HARQ reception buffer 102 (DELETED = 3), and ACK is transmitted to the sending side at the timings 8 and 9.

On the other hand, a HARQ process #2 is an example of the case where decoding ends in failure. Assume that the HARQ reception buffer 102 is in the (OCCUPIED = 3, AVAILABLE = 6) state. In this state, when a transmission by the HARQ process #2 is carried out at the timings 4 and 5, since six memory units are required in total (REQUIRED = 6) for corresponding received soft symbols to be able to be added (ADD = 3), the received soft symbols are added to the HARQ reception buffer 102 at the timing 5 (OCCUPIED = 6, AVAILABLE 3). The received soft symbols are decoded by the decoder 103, and it is assumed that the decoding has ended in failure. In this case, the HARQ control section 104 keeps the soft symbols in the HARQ reception buffer 102 (DELETED = 0) and transmits feedback information NACK to the sending side at the timings 10 and 11. In response to this feedback NACK, it is assumed that a retransmission is made from the sending side at the timings 16 and 17. In this case, this retransmitted soft symbols are not added to the HARQ reception buffer 102 (ADD = 0) because the retransmitted soft symbols are combined with the previous soft symbols and then decoded. When decoding is successfully done owing to this retransmission, the HARQ control section 104 deletes the soft symbols in question from the HARQ reception buffer 102 at the timing 20 (DELETED = 3) and transmits feedback information ACK to the sending side at the timings 22 and 23. In the case of the HARQ process #2 in which decoding ends in failure for the first time but is successfully done for the subsequent time owing to the retransmission, the time period for which the soft symbols occupy the HARQ reception buffer 102 is between the timings 5 to 20 inclusive.

During the period between the timings 0 to 13 shown in FIG. 7B, assuming that the HARQ processes #0 (first) and #1 have succeeded in decoding, #2, failed, #3 and #4, succeeded, and #5 and #0 (second), failed, then the HARQ reception buffer 102 is fully occupied by the soft symbols in the ongoing HARQ processes #2, #5, and #0 (second) at the timing 13 (OCCUPIED = 9, AVAILABLE = 0).

In this fully occupied state, if a transmission by a HARQ process #1 is carried out at the timings 14 and 15, twelve memory units are required in total (REQUIRED = 12) for corresponding received soft symbols to be able to be added (ADD = 3), in which case the number of memory units required, 12, exceeds the total number of the memory units, 9. When the HARQ reception buffer 102 has fallen in this non-accessible state, the HARQ control section 104 selects one of the ongoing HARQ processes #2, #5, and #0 and discards the soft symbols corresponding to the selected HARQ process from the HARQ reception buffer 102. More specifically, while referring to the cumulative reception quality SIR in each of the HARQ processes #2, #5, and #0 in question, the HARQ control section 104 selects the lowest-SIR HARQ process as a target of DISCARD and discards the soft symbols in the selected process from the HARQ reception buffer 102 (DISCARD = 3). Thus, the received soft symbols in the HARQ process #1 in question are added to the released memory units at the timing 15. When the soft symbols in the HARQ process discarded are next transmitted, it is handled not as the retransmitted soft symbols but as newly received soft symbols.

As described above, in a case where three memory units are assigned to one HARQ process, it is possible to maintain the HARQ buffer in operation without it overflowing, while handling six HARQ processes with nine memory units. That is, it is possible to handle n HARQ processes by using a memory capacity corresponding to m (< n) processes. As shown in the example of FIG. 2, considering the fact that the probability of successful decoding in all six HARQ processes is approximately 53%, it can be understood that six HARQ processes can be handled by using nine memory units that correspond to three processes, whereby the efficiency of memory usage is considerably increased.

### 2.4) Comparative example

In comparison with the above-described specific example, a case will be considered where conventional multiple-HARQ-process control is employed. In this case, for six HARQ processes, 18 memory units corresponding to six processes are provided to a HARQ reception buffer in order that a new HARQ process can be always accepted.

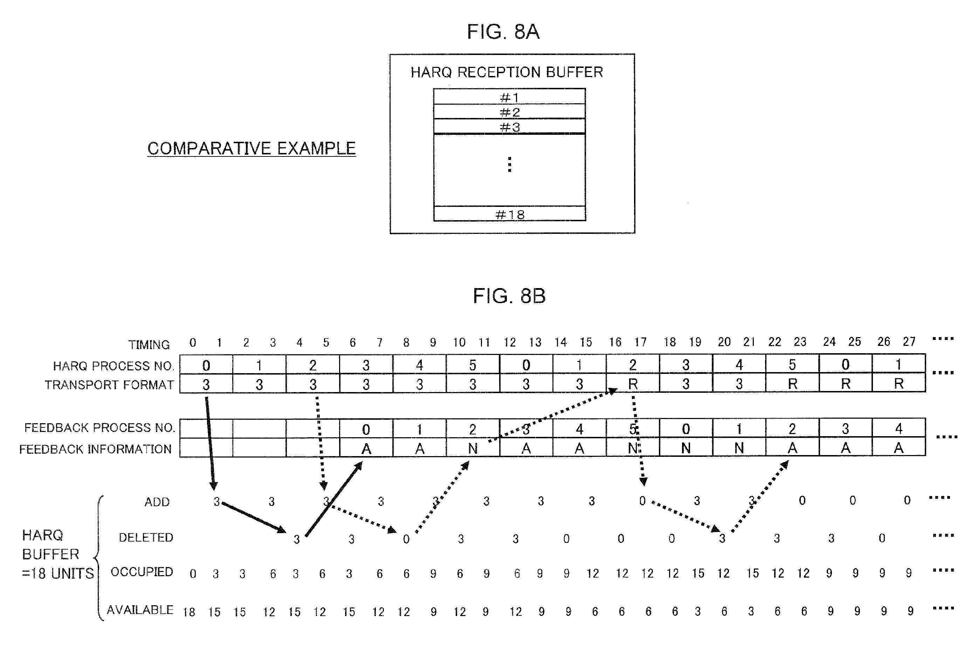

FIG. 8A is a schematic diagram showing the capacity (the number of the memory units) of a HARQ reception buffer used in conventional multiple-HARQ-process control, and FIG. 8B is a state transition diagram of the HARQ reception buffer to describe an example of the operations of the conventional multiple-HARQ-process control in the multi-stop-and-wait mode. The conventional operations are basically similar to the operations described above with reference to FIG. 7B except that a step of selective DISCARD is not included in this conventional multiple-HARQ-process control.

In the example shown in FIG. 8B, six or more memory units are unused at most timings. Accordingly, it is understood that the efficiency of memory resource usage is very low according to the conventional multiple-HARQ-process control.

### 2.5) Effects

As described above, according to the present example, even if the HARQ reception buffer is in a state of not having a free space large enough to accept a new HARQ process, received soft symbols corresponding to at least one HARQ process are selectively discarded, whereby the HARQ reception buffer can accept the new HARQ process. That is, it is possible to efficiently handle n HARQ processes by using a memory capacity corresponding to m (< n) processes. Accordingly, the efficiency of memory resource usage can be greatly increased.

### 3. Second exemplary embodiment

In the control according to the above-described first exemplary embodiment, all received soft symbols in one retransmission process are discarded when selective DISCAERD is performed. However, in some schemes such as IR-HARQ by which additional redundant information is sequentially retransmitted after coded main-body information, decoding cannot be performed only with additional information. Accordingly, on the receiving side, if all the received soft symbols in a retransmission process are discarded, decoding cannot be carried out even if the sending side retransmits additional redundant information in the retransmission process in question. Therefore, it is necessary to keep at least main-body information in a retransmission process that is a target of DISCARD. If the turbo code with the code rate R = 1/3 shown in FIG. 1B is taken as an example, the first-transmitted systematic bit sequence S cannot be discarded in order that decoding can be carried out in a retransmission process.

According to a second exemplary embodiment of the present invention, when soft symbols in a retransmission process are discarded, control is performed such that additional redundant information only is discarded (partial DISCARD). Hereinafter, a multiple-retransmission-process control method according the second exemplary embodiment will be described by using a turbo code with the code rate R = 1/3 as an example.

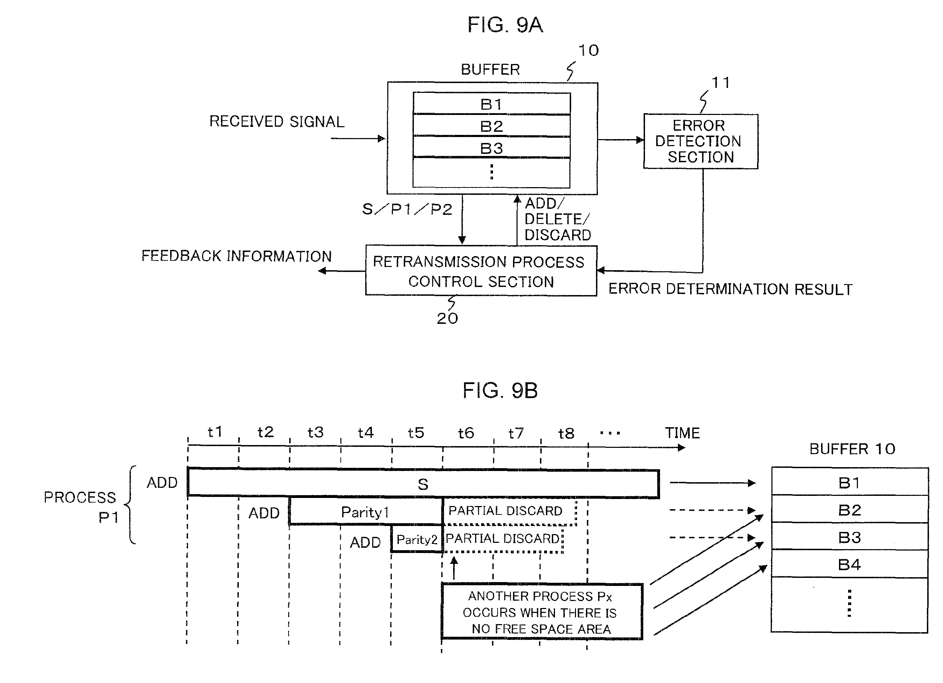

FIG. 9A is a block diagram showing a schematic configuration of a retransmission process control circuit in a communication device according to the second exemplary embodiment of the present invention. FIG. 9B is a time chart to describe the operations in the multiple-retransmission-process control method according to the second exemplary embodiment. It is assumed that each of memory areas B1, B2 and so on of a buffer 10 stores a received signal to be subjected to a retransmission process, that is, any one of a systematic bit sequence S, additional redundant information Parity1, and additional redundant information Parity2. Note that, in this case, a received signal to be subjected to error detection is any one of the following: S, (S + Parity1), (S + Parity2), and (S + Parity1 + Parity2).

An error detection section 11 detects an error in a received signal stored in the buffer 10 and outputs the result of this detection to a retransmission process control section 20. The retransmission process control section 20 performs ADD, DELETE, or partial DISCARD of a received signal corresponding to a retransmission process.

ADD of a received signal and DELETE of a received signal are performed as in the first exemplary embodiment. Partial DISCARD of a received signal is performed when a new received signal occurs in a state where the buffer 10 does not have as large a free area as required. Specifically, at least one process is selected among retransmission processes in progress, and the received signal Parity1 or Parity2, or both of them, corresponding to the additional redundant information in the selected process is discarded from the buffer 10 (release of a corresponding area of the buffer 10).

When no error is detected in a received signal, the retransmission process control section 20 deletes the received signal in question and returns feedback information indicative of a normal reception (e.g., ACK) to the originator of this received signal. When an error is detected in a received signal, the retransmission process control section 20 returns feedback information indicative of a reception in error (e.g., NACK) to the originator of the received signal, while keeping the received signal in the buffer 10. The originator, upon knowing the reception in error, transmits again the signal to retransmit (here, Parity1 or Parity2) in accordance with the retransmission process. On the receiving side, upon receipt of this retransmitted signal, error detection is carried out by using the retransmitted received signal and the previously received signal.

In the example shown in FIG. 9B, a received signal (S) of a systematic bit sequence S to be subjected to a retransmission process P1 is added to the memory area B1 of the buffer 10 at the time point t1, and it is assumed that an error is detected by the error detection section 11. In this case, the received signal (S) is kept in the memory area B1, and feedback information NACK is returned to the originator. In response to this, it is assumed that a parity bit sequence Parity1 is retransmitted from the originator, and that a received signal (Parity2) thereof is added to the memory area B2 of the buffer 10 at the time point t3. However, if an error is detected also in the received signals (S + Parity1) that are a target of error detection, feedback information NACK is returned to the originator. Accordingly, the buffer 10 falls in a state where the received signal (S) is kept in the memory area B1 and the received signal (Parity1) is kept in the memory area B2, individually. In this state, it is assumed that a parity bit sequence Parity2 is retransmitted from the originator, that the received signal (Parity2) thereof is added to the memory area B3 of the buffer 10 at the time point t5, and that this causes a shortage of free area in the buffer 10 with the result that three memory areas required for a new retransmission process cannot be secured.

Here, assume that a received signal to be subjected to another retransmission process Px occurs at the time point t6 to the buffer 10 that does not have a required number of free areas. Then, the retransmission process control section 20 selects as a target of DISCARD one of the retransmission processes that are using the buffer 10, and performs partial DISCARD by discarding the received signal (Parity1) and/or received signal (Parity2) corresponding to the selected retransmission process from the buffer 10. For this selection of a retransmission process as a target of partial DISCARD, various methods can be used as in the first exemplary embodiment, such as 1) selecting the oldest process, 2) selecting the lowest-reception-quality process, and 3) selecting a process based on 1) and 2). Here, it is assumed that the retransmission process P1 is selected as a target of partial DISCARD.

Upon selection of the retransmission process P1 as a target of partial DISCARD, the retransmission process control section 20 performs partial DISCARD at the time point t6 by discarding the received signal (Parity1) stored in the memory area B2 of the buffer 10 and/or the received signal (Parity2) stored in the memory area B3, whereby the retransmission process control section 20 can add the received signal of the new retransmission process Px to the memory area B2 and/or memory area B3 of the buffer 10.

Incidentally, even if partial DISCARD is performed with respect to the retransmission process P1, the systematic bit sequence S in the retransmission process P1 is kept in the memory area B1 of the buffer 10. Therefore, if the originator retransmits the parity bit sequence Parity1 or Parity2 in the retransmission process P1, it is possible to obtain the received signals (S + Parity1), (S + Parity2), or (S + Parity1 + Parity2), whereby it is possible to perform error detection.

As described above, even if the buffer 10 becomes short of free area, a free area is created by partially discarding received signals in a retransmission process, based on a certain criterion of selection, whereby a new received signal can be added to the buffer 10. Thus, it is possible to efficiently carry out multiple retransmission processes by using memory areas the capacity of which is smaller than the capacity capable of accommodating all the multiple retransmission processes, whereby it is possible to efficiently use the memory resource.

### 4. Application example

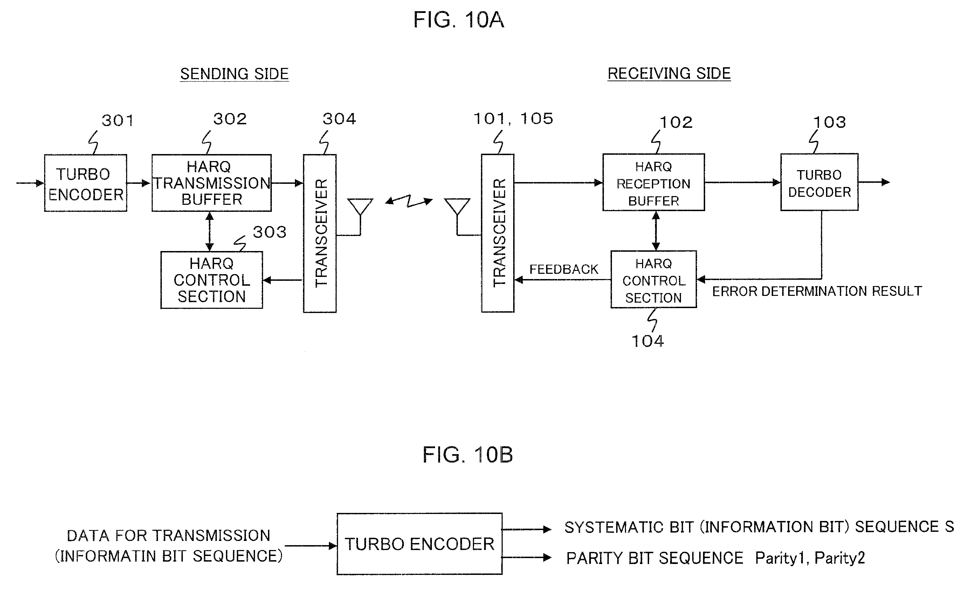

FIG. 10A is a schematic block diagram of a packet data communications system using the radio communication device according to the example of the present invention, and FIG. 10B is a block diagram showing a turbo encoder, which is an example of an encoder. Here, the radio communication device shown in FIG. 5 is used on the receiving side. Therefore, in FIGS. 5 and 10A, those blocks that have similar functions are denoted by the same reference numerals.

Referring to FIG. 10A, a turbo encoder 301 in the sending-side device, upon receipt of an input of a series of data packets for transmission from an upper layer, performs error correction encoding on each one of these packets, thereby generating coded data packets. The coded data packets are stored in a HARQ transmission buffer 302. Under the control of a HARQ control section 303, these packets are subjected to, for example, QPSK modulation by a transceiver section 304 and then transmitted out through a radio channel.

A transceiver section (101, 105) in the receiving-side device demodulates a received RF signal and outputs received soft symbols of each encoded data packet to a HARQ reception buffer 102. The received soft symbols are stored in the HARQ reception buffer 102 and decoded by a turbo decoder 103. The turbo decoder 103 decodes the received soft symbols and outputs the received data packet to an upper layer. At this time, the turbo decoder 103 returns to a HARQ control section 104 a result of error determination indicating whether the decoding is normally complete or an error is detected. In the case where the received result of error determination indicates normal decoding, the HARQ control section 104 returns ACK as feedback information to the sending-side communication device and, at the same time, deletes the corresponding soft symbols stored in the HARQ reception buffer 102. In the case where the received result of error determination indicates error occurrence, the HARQ control section 104 returns NACK as feedback information to the sending-side communication device and keeps the corresponding soft symbols stored in the HARQ reception buffer 102 until decoding is successfully done or the soft symbols in question are selectively/partially discarded.

The HARQ control section 303 on the sending-side device carries out retransmission control in accordance with the feedback information received from the receiving-side device. Specifically, when NACK is received, the HARQ control section 303 retransmits a corresponding coded data packet stored in the HARQ transmission buffer 302. When ACK is received, the HARQ control section 303 continues transmission processing.

Such sending- and receiving-side radio communication devices can be used for, for example, radio communication sections of a base station (Node B or eNB) and of a mobile station/user equipment (UE) in a mobile communications system.

The present invention is applicable to a radio communications system including a retransmission function and, more particularly, for example, to a base station and a mobile station in a mobile communications system.

The present invention may be embodied in other specific forms without departing from the spirit or essential characteristics thereof. The above-described exemplary embodiments and examples are therefore to be considered in all respects as illustrative and not restrictive, the scope of the invention being indicated by the appended claims rather than by the foregoing description, and all changes which come within the meaning and range of equivalency of the claims are therefore intended to be embraced therein.

An example 1 is a method for processing data in a plurality of retransmission processes in a receiving-side communication device, comprising:
determining whether a reception buffer for retransmission process is able to store a received signal;
when the reception buffer for retransmission process is unable to store the received signal, discarding at least part of an existing received signal corresponding to a retransmission process in progress from the reception buffer for retransmission process; and
storing the received signal in the reception buffer for retransmission process.

An example 2 is a method according to example 1, wherein at least one retransmission process is selected as a target of discarding from a plurality of retransmission processes in progress.

An example 3 is a method according to example 2, wherein a retransmission process having lowest reception quality is selected as a target of discarding among the retransmission processes in progress.

An example 4 is a method according to example 2 or 3, wherein an oldest retransmission process is selected as a target of discarding among the retransmission processes in progress.

An example 5 is a method according to any of examples 1-4, wherein the existing received signal related to the retransmission process which is a target of discarding is discarded in entirety.

An example 6 is a method according to any of examples 1-4, wherein the existing received signal related to the retransmission process which is a target of discarding is discarded in part.

An example 1 is a device for processing data in a plurality of retransmission processes in a receiving side, comprising:
a storage section for storing a received signal for retransmission process;
a determination section for determining whether the storage section is able to store a received signal; and
a controller controlling such that, when the storage section is unable to store the received signal, at least part of an existing received signal corresponding to a retransmission process in progress is discarded from the storage section so as to store the received signal in the storage section.

An example 8 is a device according to example 7, wherein the controller selects at least one retransmission process as a target of discarding from a plurality of retransmission processes in progress.

An example 9 is a device according to example 8, wherein the controller selects a retransmission process having lowest reception quality as a target of discarding among the retransmission processes in progress.

An example 10 is a device according to example 8 or 9, wherein the controller selects an oldest retransmission process as a target of discarding among the retransmission processes in progress.

An example 11 is a device according to any of examples 7-10, wherein the controller discards the existing received signal in entirety, wherein the existing received signal is related to the retransmission process which is a target of discarding.

An example 12 is a device according to any of examples 7-10, wherein the controller discards the existing received signal in part, wherein the existing received signal is related to the retransmission process which is a target of discarding.

An example 13 is a system which allows retransmission process between a sending-side communication device and a receiving-side communication device, wherein the receiving-side communication device comprises:
a storage section for storing a received signal for retransmission process;
a determination section for determining whether the storage section is able to store a received signal; and
a controller controlling such that, when the storage section is unable to store the received signal, at least part of an existing received signal corresponding to a retransmission process in progress is discarded from the storage section so as to store the received signal in the storage section.

An example 14 is a system according to example 13, wherein the controller selects at least one retransmission process as a target of discarding from a plurality of retransmission processes in progress.

An example 15 is a system according to example 14, wherein the controller selects a retransmission process having lowest reception quality as a target of discarding among the retransmission processes in progress.

An example 16 is a system according to example 14 or 15, wherein the controller selects an oldest retransmission process as a target of discarding among the retransmission processes in progress.

An example 17 is a system according to any of examples 13-16, wherein the controller discards the existing received signal in entirety, wherein the existing received signal is related to the retransmission process which is a target of discarding.

An example 18 is a system according to any of examples 13-16, wherein the controller discards the existing received signal in part, wherein the existing received signal is related to the retransmission process which is a target of discarding.

An example 19 is a method for processing data in a plurality of hybrid automatic repeat request (HARQ) processes in a receiving-side communication device, comprising:
determining whether a reception buffer for retransmission process is able to store a received coded packet;
when the reception buffer for retransmission process is unable to store the received coded packet, selecting one from coded packets corresponding to HARQ processes in progress, wherein a selected coded packet is an oldest coded packet and/or a coded packet having lowest accumulative reception quality;
discarding the selected coded packet from the reception buffer for retransmission process to store the received coded packet in the reception buffer for retransmission process; and
decoding coded packets stored in the reception buffer for retransmission process.

An example 20 is a device for processing data in a plurality of hybrid automatic repeat request (HARQ) processes in a receiving side, comprising:
a storage section for storing received coded packets for retransmission process;
a determination section for determining whether the storage section is able to store a received coded packet;
a controller controlling such that, when the storage section is unable to store the received coded packet, at least part of existing received coded packets corresponding to a HARQ process in progress is discarded from the storage section so as to store the received coded packet in the storage section; and
a decoder for decoding coded packets stored in the reception buffer for retransmission process.

An example 21 is a program, embodied in a recording medium, for instructing a computer to process data in a plurality of retransmission processes in a receiving-side communications device, comprising:
determining whether a reception buffer for retransmission process is able to store a received signal;
when the reception buffer for retransmission process is unable to store the received signal, discarding at least part of an existing received signal corresponding to a retransmission process in progress from the reception buffer for retransmission process; and
storing the received signal in the reception buffer for retransmission process.

## Claims

1. A method for processing data in a plurality of retransmission processes in a receiving-side communication device, comprising:
determining whether a reception buffer for retransmission process is able to store a received signal;
when the reception buffer for retransmission process is unable to store the received signal, discarding at least part of an existing received signal corresponding to a retransmission process in progress from the reception buffer for retransmission process; and
storing the received signal in the reception buffer for retransmission process.

2. The method according to claim 1, wherein at least one retransmission process is selected as a target of discarding from a plurality of retransmission processes in progress.

3. The method according to claim 2, wherein a retransmission process having lowest reception quality is selected as a target of discarding among the retransmission processes in progress.

4. The method according to claim 2 or 3, wherein an oldest retransmission process is selected as a target of discarding among the retransmission processes in progress.

5. The method according to claim 1 or 2, wherein the existing received signal related to the retransmission process which is a target of discarding is discarded in entirety or in part.

6. A device for processing data in a plurality of retransmission processes in a receiving side, comprising:
a storage section for storing a received signal for retransmission process;
a determination section for determining whether the storage section is able to store a received signal;
a controller controlling such that, when the storage section is unable to store the received signal, at least part of an existing received signal corresponding to a retransmission process in progress is discarded from the storage section so as to store the received signal in the storage section.

7. The device according to claim 6, wherein the controller selects at least one retransmission process as a target of discarding from a plurality of retransmission processes in progress.

8. The device according to claim 7, wherein the controller selects a retransmission process having lowest reception quality as a target of discarding among the retransmission processes in progress.

9. The device according to claim 7 or 8, wherein the controller selects an oldest retransmission process as a target of discarding among the retransmission processes in progress.

10. The device according to claim 6 or 7, wherein the controller discards the existing received signal in entirety or in part, wherein the existing received signal is related to the retransmission process which is a target of discarding.

11. A system which allows retransmission process between a sending-side communication device and a receiving-side communication device which comprises the device according to claim 6 or 7.

12. The method according to claim 1 or 2, wherein each of the retransmission processes is a hybrid automatic repeat request (HARQ) process; the received signal is a received coded packet; and the existing received signal is a received coded packet selected from coded packets corresponding to HARQ processes in progress, wherein a selected coded packet is an oldest coded packet and/or a coded packet having lowest accumulative reception quality,
wherein the method further comprises: decoding coded packets stored in the reception buffer for retransmission process.

13. The device according to claim 6 or 7, wherein each of the retransmission processes is a hybrid automatic repeat request (HARQ) process; the received signal is a received coded packet; and the existing received signal is a received coded packet selected from coded packets corresponding to HARQ processes in progress, wherein a selected coded packet is an oldest coded packet and/or a coded packet having lowest accumulative reception quality,
wherein the device further comprises a decoder for decoding coded packets stored in the reception buffer for retransmission process.

14. A program, embodied in a recording medium, for instructing a computer to process data in a plurality of retransmission processes in a receiving-side communication device, comprising:
determining whether a reception buffer for retransmission process is able to store a received signal;
when the reception buffer for retransmission process is unable to store the received signal, discarding at least part of an existing received signal corresponding to a retransmission process in progress from the reception buffer for retransmission process; and
storing the received signal in the reception buffer for retransmission process.
